# EUROPEAN PATENT APPLICATION

(11) **EP 4 191 955 A1**
(43) Date of publication of application: **07.06.2023**
(21) Application number: 20953853.7
(22) Date of filing: 20.10.2020
(51) Int. Cl.: H04L 12/46

(54) **METHOD AND DEVICE FOR SECURELY ACCESSING INTRANET APPLICATION**

(30) Priority: 16.09.2020 CN 202010975703
(71) Applicant: Xiamen Wangsu Co., Ltd., Xiamen, Fujian 361003 (CN)
(72) Inventor: CHEN, Jiawei, Xiamen, Fujian 361003 (CN)
(74) Representative: Novagraaf Technologies
(86) International application number: PCT/CN2020/122264
(87) International publication number: WO 2022/056996

(57) **Abstract**

The present application discloses a method for securely accessing an intranet application, the method includes: receiving authentication information fed back by an authentication server; generating second cookie setting information based on the first cookie setting information, establishing a target mapping relationship between the second cookie information and authorized content, and reconstructing the first operation page according to the local mapping table to generate a second operation page; and receiving a first access request generated by the browser based on the second operation page, querying, based on the target mapping relationship, the authorized content corresponding to the second cookie information, determining whether a target resource in a target intranet application directed to by the first access request exists in the authorized content, and accessing the target intranet application to request for the target resource in response to the target resource existing in the authorized content.

## Description

### CROSS REFERENCE TO RELATED APPLICATIONS

The present application claims priority to Chinese Patent Application No. 202010975703.1, entitled "METHOD AND DEVICE FOR SECURELY ACCESSING INTRANET APPLICATION" filed on September 16, 2020, which is incorporated by reference herein in its entirety.

### TECHNICAL FIELD

The present disclosure relates to the field of Internet technology, and in particular to a method and a device for securely accessing an intranet application.

### BACKGROUND

As network security is being increasingly challenged, more and more companies and organizations restrict their business to internal networks and prohibit access from external networks, in order to block attacks from the external networks. However, internal personnel of a company or organization usually have to access an intranet application from an external network. As a result, virtual private network (VPN) technology emerged.

A WebVPN provides access control for an intranet application based on web and allows a user to access a web application open only to an internal network. The WebVPN distinguishes from traditional VPN technologies in that the user does not have to install client software or a browser plug-in, but the user may directly access a login page through a browser for identity verification, which greatly reduces a limitation for using the VPN technology and improves user experience. However, in the existing WebVPN system, after the user being authenticated, key information of the user (such as user identification code or access authority information, etc.) is stored on a side of the browser. Obviously, it tends to cause information divulging and leave potential security risks by storing the key information of the user at the browser side.

In view of this, it is necessary to provide a new method and a device for securely accessing an intranet application to solve the above-mentioned problems.

### SUMMARY

The present disclosure aims to provide a method and a device for securely accessing an intranet application to prevent key information of a user from being divulged.

In order to realize the above purpose, the present disclosure provides, on one hand, a method for securely accessing an intranet application, applied to a proxy server storing a local mapping table, the local mapping table is used for recording a mapping relationship between a real domain name and a virtual domain name of the intranet application. The method including: receiving authentication information fed back by an authentication server, wherein the authentication information at least includes first cookie setting information, authorized content and a first operation page; generating second cookie setting information based on the first cookie setting information and generating second cookie information according to the second cookie setting information to establish a target mapping relationship between the second cookie information and the authorized content, reconstructing the first operation page according to the local mapping table to generate a second operation page, and transmitting the second cookie setting information and the second operation page to a browser; receiving a first access request generated by the browser based on the second operation page, checking, based on the target mapping relationship, the authorized content corresponding to the second cookie information according to the second cookie information carried in the first access request, and determining whether a target resource in a target intranet application directed to by the first access request exists in the authorized content, and accessing the target intranet application in response to the target resource existing in the authorized content to request for the target resource.

In some embodiments, the operation of generating the second cookie setting information based on the first cookie setting information includes: generating a target character string value based on a character string value in the first cookie setting information; and taking the target character string value as a character string value of the second cookie setting information.

In some embodiments, before the operation of receiving the authentication information fed back by the authentication server, the method further includes: acquiring a real domain name of each intranet application, and setting a corresponding virtual domain name for each real domain name, wherein the virtual domain name includes a proxy domain name and a path value, and different real domain names correspond to different path values; and establishing a mapping relationship between the each real domain name and the corresponding virtual domain name, and storing the mapping relationship in the local mapping table.

In some embodiments, the operation of reconstructing the first operation page according to the local mapping table to generate the second operation page includes: acquiring a real domain name of each intranet application in the first operation page; and searching for virtual domain names corresponding to acquired real domain names according to the local mapping table, and modifying the acquired real domain names into corresponding virtual domain names.

In some embodiments, the operation of determining whether the target resource in the target intranet application directed to by the first access request exists in the authorized content includes: searching for a real domain name corresponding to a virtual domain name carried in the first access request according to the local mapping table; determining whether searched real domain name exists in the authorized content; or searching for the real domain name corresponding to the virtual domain name carried in the first access request according to the local mapping table, and modifying an URL in the first access request based on the searched real domain name, the modifying the URL in the first access request based on the searched real domain name includes replacing the virtual domain name carried in the first access request with the searched real domain name; and determining whether modified URL exists in the authorized content.

In some embodiments, before accessing the target intranet application, the method further includes: modifying the virtual domain name carried in the first access request into corresponding real domain name to reconstruct the first access request; and transmitting a request for the target resource to the target intranet application based on reconstructed first access request.

In some embodiments, after accessing the target intranet application, the method further includes: receiving user response information fed back by the target intranet application, where the user response information at least includes a third cookie setting information; and reconstructing the third cookie setting information and acquiring information in a domain field in the third cookie setting information, and generating a third cookie information according to the third cookie setting information to establish a mapping relationship between the information in the domain field and the third cookie information.

In some embodiments, after transmitting the reconstructed third cookie setting information to the browser, the method further includes: receiving a second access request transmitted by the browser, and searching for the third cookie information based on the local mapping table and the mapping relationship between the information in the domain field and the third cookie information in response to the second access request not carrying the third cookie information; and adding the third cookie information to the second access request to reconstruct the second access request, and transmitting reconstructed second access request to an intranet application directed to by the second access request.

In some embodiments, after accessing the target intranet application, the method further includes: receiving user response information fed back by the target intranet application, where the user response information includes a user response page; acquiring each real domain name in the user response page, and searching for a virtual domain name corresponding to the each real domain name according to the local mapping table; and reconstructing the user response page based on searched virtual domain names and transmitting reconstructed user response page to the browser.

In some embodiments, before the operation of checking the authorized content according to the second cookie information carried in the first access request, the method further includes: determining whether the first access request carries the second cookie information, and checking the authorized content in response to the first access request carrying the second cookie information.

In order to achieve the above purpose, the present disclosure further provides, on the other hand, a device for securely accessing an intranet application, applied to a proxy server and storing a local mapping table, the local mapping table is used for recording a mapping relationship between a real domain name and a virtual domain name of the intranet application, the device including: an information receiving module, configured to receive authentication information fed back by an authentication server, where the authentication information at least includes first cookie setting information, authorized content and a first operation page; an information reconstructing module, configured to generate second cookie setting information based on the first cookie setting information and generate second cookie information according to the second cookie setting information to establish a target mapping relationship between the second cookie information and the authorized content, the information reconstructing module is further configured to reconstruct the first operation page according to the local mapping table to generate a second operation page, and transmit the second cookie setting information and the second operation page to a browser; and an authority determining module, configured to receive a first access request generated by the browser based on the second operation page, check, based on the target mapping relationship, the authorized content corresponding to the second cookie information according to the second cookie information carried in the first access request, and determine whether a target resource in a target intranet application directed to by the first access request exists in the authorized content, the authority determining module is configured to access the target intranet application in response to the target resource existing in the authorized content to request for the target resource.

In some embodiments, the operation of generating the second cookie setting information based on the first cookie setting information includes: generating a target character string value based on a character string value in the first cookie setting information; and taking the target character string value as a character string value of the second cookie setting information.

In some embodiments, the device further includes a domain name processing module, configured to acquire a real domain name of each intranet application, set a corresponding virtual domain name for each real domain name, and establish a mapping relationship between the each real domain name and the corresponding virtual domain name and store the mapping relationship in the local mapping table, where the virtual domain name includes a proxy domain name and a path value, and different real domain names correspond to different path values.

In some embodiments, the operation of reconstructing the first operation page according to the local mapping table to generate the second operation page includes: acquiring a real domain name of each intranet application in the first operation page; and searching for virtual domain names corresponding to acquired real domain names according to the local mapping table, and modifying the acquired real domain names into corresponding virtual domain names.

In some embodiments, the operation of determining whether the target resource in the target intranet application directed to by the first access request exists in the authorized content includes: searching for a real domain name corresponding to a virtual domain name carried in the first access request according to the local mapping table; determining whether searched real domain name exists in the authorized content; or searching for the real domain name corresponding to the virtual domain name carried in the first access request according to the local mapping table, and modifying an URL in the first access request based on the searched real domain name, where the operation of modifying the URL in the first access request based on the searched real domain name includes replacing the virtual domain name carried in the first access request with the searched real domain name; and determining whether modified URL exists in the authorized content.

In some embodiments, the information reconstructing module is further configured to modify the virtual domain name carried in the first access request into corresponding real domain name to reconstruct the first access request; and the authority determining module is further configured to transmit a request for the target resource to the target intranet application based on reconstructed first access request.

In some embodiments, the information receiving module is further configured to receive user response information fed back by the target intranet application, wherein the user response information at least includes a third cookie setting information; and the information reconstructing module is further configured to reconstruct the third cookie setting information and acquire information in a domain field in the third cookie setting information, and generate a third cookie information according to the third cookie setting information to establish a mapping relationship between the information in the domain field and the third cookie information.

In some embodiments, the authority determining module is further configured to receive a second access request transmitted by the browser, search for the third cookie information based on the local mapping table and the mapping relationship between the information in the domain field and the third cookie information in response to the second access request not carrying the third cookie information, add the third cookie information to the second access request to reconstruct the second access request, and transmit reconstructed second access request to an intranet application directed to by the second access request.

In order to achieve the above purpose, the present disclosure further provides an apparatus for securely accessing an intranet application, including a memory and a processor, the memory is configured to store a computer program, which, when executed by the processor, causes the processor to implement operations of the method for securely accessing an intranet application.

Accordingly, in the technical solutions provided in the present disclosure, a sole mapping relationship between the key information of a user and the second cookie information is established by binding the second cookie information with the authorized content. Then, the authentication on the user is managed through the second cookie information, so that the authentication and application accessing are both performed at the proxy server side. In this way, there is no need to store the key information of the user at the browser side, thereby the key information of the user can be prevented from being divulged. Meanwhile, by updating the second cookie information, different users cannot use a same account and password to access the internal network at the same time, thereby security of the system can be further improved.

### BRIEF DESCRIPTION OF THE DRAWINGS

In order to illustrate the technical solutions in the embodiments of the present disclosure more clearly, the drawings used in the description of the embodiments will be briefly described below. It is obvious that the drawings in the following description only relate to some embodiments of the present disclosure. For those skilled in the art, other drawings may be obtained in accordance with these drawings without any inventive effort.
FIG. 1 is a schematic diagram of an architecture of a WebVPN system provided in some embodiments of the present disclosure;
FIG. 2 is a flowchart of a method of securely accessing an intranet application provided in some embodiments of the present disclosure;
FIG. 3 is a timing sequence diagram for an accessing process of the intranet application by a user provided in some embodiments of the present disclosure;
FIG. 4 is a schematic diagram of functional modules of a device for securely accessing an intranet application provided in some embodiments of the present disclosure;
FIG. 5 is a schematic diagram of a structure of an apparatus for securely accessing the intranet application provided in some embodiments of the present disclosure.

### DETAILED DESCRIPTION

In order to make the objective, the technical solutions and the advantages of the present disclosure more clear, the embodiments of the present disclosure will be further described in details with reference to the accompany drawings.

As network security is being increasingly challenged, more and more companies and organizations restrict their business to internal networks and prohibit access from external networks, in order to block attacks from the external networks. However, internal personnel of a company or organization usually have to access an intranet application from an external network. As a result, virtual private network (VPN) technology emerged. With the VPN technology, a public network can be used to establish a private network, and a remote access by a user can be realized through encryption to a data packet and conversion of a target address of the data packet.

As one of the VPN technologies, a Web virtual private network (WebVPN) may provide access control for intranet application based on web and allows the user to access a web application open only to an internal network. The WebVPN distinguishes from a traditional VPN technology in that the user does not have to install client software or a browser plug-in, but the user may directly access a login page through a browser for identity verification, which greatly reduces a limitation for using the VPN technology and improves user experience. However, in the existing WebVPN system, the authentication on the user and application accessing are separate. Particularly, during the authentication, after the user passes verification of an authentication server, key information of the user (for example, a user identification code or access authority information, or the like) returned by the authentication server will be stored at a browser side. And during the application accessing, when the user performs accessing of the intranet application, the browser will send the key information of the user along with an access request sent by the user to a proxy server, so that the proxy server can manage the above-described access request according to the key information of the user. Obviously, it tends to cause information divulging and leave potential security risks by storing the key information of the user at the browser side.

In addition, most websites would enhance security of information by deploying a secure sockets layer (SSL) credential, and there are usually a plurality of websites in an intranet to provide different intranet applications. Therefore, when a browser is accessing the above different websites, management on different SSL credentials is needed, which is a heavy overhead for the browser.

Therefore, it is an urgent problem to be solved in the art to improve the authentication and the application accessing in the WebVPN system to prevent the key information of user from being divulged.

Technical solutions provided in the present disclosure can solve the above problem.

In order to facilitate understanding content of a cookie mentioned in the present disclosure, the content is described briefly in the following.

A cookie is used to store user status information, so as to realize a seamless connection with a web server. A cookie is usually used to process a user's preference and track a session variable to facilitate use by a server end. A processing procedure of a cookie may be understood as, to put it plainly, a client transmits an access request to a server through a browser; in response to receiving the above request, the server generates a Set-cookie according to information provided by the client and stores the generated Set-cookie in a hyper text transfer protocol (HTTP) response message and returns the message to the client; in response to receiving the above-described HTTP response message, the client extracts content of the Set-cookie from the HTTP response message and generates cookie information based on the content of the Set-cookie; and the client stores the above cookie information locally and then the browser will send corresponding cookie information to the server when transmitting an http request to the server.

A format of the Set-cookie is as follows:
Set-cookie: name=value; domain=DOMAIN_NAME; path=PATH; expires=DATE; secure Herein, the name field is used to define a name of the cookie information, the value field is used to store a character string value in the cookie information, the domain field is used to define to which domain name the cookie information is effective, the path field is used to define a path associated with the cookie information, the expires field is used to define an expiration time of the cookie information, and the secure field is used to record a security mark. It shall be noted that when the domain field is null, the browser allows to access only the host that issues this cookie.

In response to receiving the Set-cookie transmitted by the server, the browser parses the above Set-cookie to generate the cookie information and stores the generated cookie information locally. Generally, a browser stores a large quantity of different cookie information in local. When the browser transmits an HTTP request to the server, the browser determines which cookie information to be added in an HTTP message based on uniform resource locator (URL) information in the HTTP request. Particularly, the browser screens cookie information stored locally according to domain names and paths contained in the URL information in the HTTP request. In response to a domain field and a path field in a certain piece of cookie information comply with the above domain names and paths, the browser adds this cookie information into a message header of the above HTTP request.

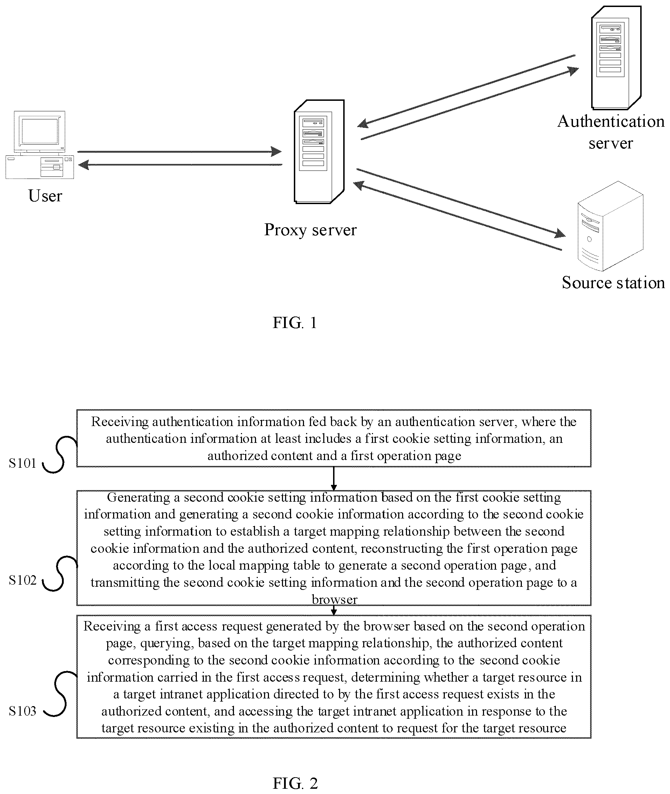

FIG. 1 is a schematic diagram of an architecture of a WebVPN system provided in some embodiments of the present disclosure.

In an embodiment, an authentication server is used to verify a login request of a user. A source station is disposed in an intranet and runs an intranet application providing a service. The proxy server plays a role of a VPN gateway. Besides, the proxy server may collect a real domain name, i.e., a public network domain name, of each intranet application in an internal network, converge the each real domain name under a proxy domain name of the VPN according to a preset rule, establish a mapping relationship between a real domain name and a converged domain name (i.e., virtual domain name), and store the mapping relationship in a local mapping table.

In practice, when logging in an internal network, the user may open a VPN login page through a browser and input an account and a password. The browser generates a login request according to information input by the user. The login request is forwarded to the authentication server by the proxy server. The authentication server verifies the received login request according to pre-stored user information, and feeds back key information of the user (for example, verification information, user ID and authorized content and on the like) to the proxy server based on a verification result. The proxy server stores the key information of the user locally in response to receiving the above key information of the user.

When a subsequent access request from the user arrives at the proxy server, the proxy server performs authentication management on this access request based on stored key information of the user. An authenticated access request may be transmitted by the proxy server through a VPN network to a corresponding intranet source station to acquire a resource. The proxy server prohibits an unauthenticated access request from accessing the internal network. Information fed back by the intranet source station is transmitted to the user through the proxy server, so that the access of the intranet application by the user is implemented. It shall be noted that the proxy server in this embodiment establishes communication connection with each intranet source station through the VPN network, herein the VPN network may be implemented based on an architecture of software-defined wide area network (SD-WAN).

In this embodiment, the proxy server is in charge of authentication and application access. It is not necessary for the key information of the user fed back by the authentication server to be stored in the client, thereby preventing the key information of the user from being divulged.

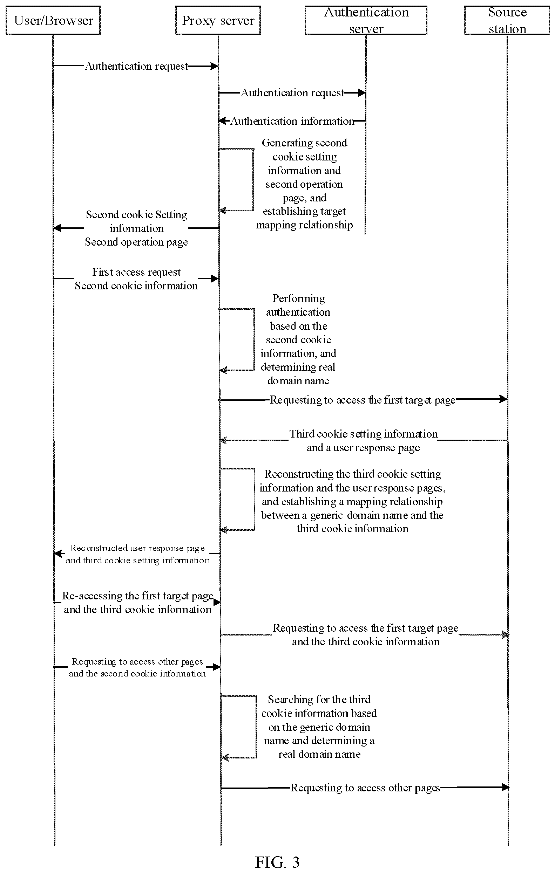

Reference is made to FIG. 2 and FIG. 3. FIG. 2 is a flowchart of a method for securely accessing an intranet application provided in some embodiments of the present disclosure. The above method for securely accessing an intranet application is applicable to the proxy server. FIG. 3 is a timing sequence diagram for an accessing process of the intranet application by the user provided in some embodiments of the present disclosure.

S 101: receiving authentication information fed back by an authentication server, where the authentication information at least includes first cookie setting information, authorized content and a first operation page.

In this embodiment, after the login request transmitted by the user is forwarded to the authentication server via the proxy server, the authentication server verifies the login request and generates authentication information based on a verification result. The above authentication information includes the key information of the user (for example, verification information, a user ID and authorized content and the like). Then, the authentication server transmits the authentication information to the proxy server, thereby the proxy server may receive the above authentication information.

It shall be particularly noted that the authentication information generated by the authentication server at least includes one piece of Set-cookie (i.e., the first cookie setting information), the authorized content and the first operation page. The authorized content is used to define which intranet applications or which intranet resources may be accessed by the user. The authorized content may be implemented as a domain name accessible to an application or an URL accessible to a resource, that is, to write the domain name of the intranet application or the URL of the intranet resource accessible by the user into the above-described authorized content. It shall be noted that the authorized content is generated by the authentication server, thus the domain name in the authorized content or the domain name in the URL is generally a real domain name. The first operation page is generally an index page, which is usually a hyper text markup language (HTML) page. The page includes items for the user to access various intranet applications. The user may access different intranet applications by selecting different items on the first operation page. The first cookie setting information is generated according to a setting of the authentication server. In practice, a path field in the first cookie setting information may be set as "/" (i.e., a root directory). In this embodiment, the above authentication information may further include a user ID, which may be used as a unique identification code of the user.

In one embodiment, before receiving the authentication information fed back by the authentication server, the proxy server may establish the local mapping table and stores mapping relationships between real domain names and virtual domain names in the local mapping table.

The establishment of the local mapping table by the proxy server may be implemented in the following manner: first, acquire a real domain name of each intranet application, and set a corresponding virtual domain name for each real domain name, where the virtual domain name includes a proxy domain name and a path value, and different real domain names correspond to different path values; then a mapping relationship between the each real domain name and the virtual domain name is established and stored in the local mapping table.

In one embodiment, the proxy server may collect a real domain name of each intranet application in the internal network in advance, and then a corresponding virtual domain name is set for the each real domain name. Particularly, the proxy server may converge the above each real domain name under a proxy server domain name (i.e., a proxy domain name), and then establish a domain name mapping relationship between the each real domain name and a virtual domain name by setting different path values (for example, path1, path 2, path 3 and the like) under the proxy domain name to mark different real domain names. Herein, the virtual domain name is a combination of a proxy domain name and a path value.

For example, it is assumed that the proxy server collects the following three real domain names, *a. baidu. com, b.baidu.com, c.sina.com,* and the proxy domain name is *wsvpn.cn,* then *a.baidu.com* may be mapped to *wsvpn.cn*/*path1*, *b.baidu. com* may be mapped to *wsvpn.cn*/*path2*, and *c.sina.com* may be mapped to *wsvpn.cn*/*path3*, thereby mapping relationships between the real domain names and the virtual domain names are established.

After the proxy server establishes the mapping relationships between the real domain names and the virtual domain names, the proxy server may store the mapping relationships in a local storage device in a form of database. By querying the local mapping table, the proxy server may find a corresponding virtual domain name according to a real domain name, or find a corresponding real domain name according to a virtual domain name.

S102: generating second cookie setting information based on the first cookie setting information and generating second cookie information according to the second cookie setting information to establish a target mapping relationship between the second cookie information and the authorized content, reconstructing the first operation page according to the local mapping table to generate a second operation page, and transmitting the second cookie setting information and the second operation page to a browser.

In this embodiment, after the proxy server receives the above authentication information, the proxy server generates a new Set-cookie (i.e., second cookie setting information) based on the above first cookie setting information; and after the proxy server generates the second cookie setting information, the proxy server generates a cookie text file (i.e., second cookie information) according to content in the above-described second cookie setting information, and binds the newly generated second cookie information with the authorized content in the authentication information, thereby establishing a target mapping relationship between the second cookie information and the authorized content. With the target mapping relationship, the proxy server may find corresponding authorized content according to the second cookie information. In addition, the proxy server may store the above target mapping relationship and the authorized content in the authentication information in the local storage device.

Generation of the second cookie setting information by the proxy server based on the first cookie setting information may be implemented in the following manner: firstly, a target character string value is generated based on a character string value in the first cookie setting information; and then the target character string value is taken as a character string value of the second cookie setting information.

In one embodiment, the proxy server may extract the character string value in the first cookie setting information and encrypt the character string value (by, for example, the message-digest algorithm 5 (MD5) or the secure hash algorithm 1 (SHA1), or the like) to obtain a new character string value (i.e., the target character string value).

It shall be particularly noted that the above obtaining a new character string value by encrypting the character string value in the first cookie setting information is only an example rather than a limitation to the present application. Based on the present application, those skilled in the art may also encrypt other fields, for example, a new character string value can be obtained by encrypting all field information in the first cookie setting information.

After the proxy server generates the target character string value, the proxy server may take it as a character string value of a new Set-cookie (i.e., the second cookie setting information) and write it into a value field of the new Set-cookie (i.e., take the target character string value as a character string value of the second cookie setting information).

It shall be particularly noted that, authentication information fed back by the authentication server varies for different users, and character string values in the first cookie setting information fed back by the authentication server also vary. Thus, with regard to different users, second cookie setting information generated by the proxy server based on the first cookie setting information varies, i.e., each user corresponds to a unique piece of second cookie setting information, and correspondingly, each user corresponds to a unique piece of second cookie information. In this way, the authentication management may be performed on different users using the mapping relationship between the second cookie information and the authorized content.

It shall be particularly noted that in order to perform authentication management through the proxy server on the access request transmitted by the browser, the above access request has to carry the second cookie information, so that the proxy server can find corresponding authorized content through the second cookie information. Because the browser generates different cookie information in response to receiving different Set-cookies and the browser selects appropriate cookie information according to domain name information and path information when transmitting an access request, the second cookie setting information generated by the proxy server and the access request transmitted by the browser need to be set in order to ensure that the access request transmitted by the browser carries the second cookie information.

With regard to the second cookie setting information, the proxy server may set a domain field in the second cookie setting information as null, and set the path field in the second cookie setting information as "/". In this way, when a domain name carried in URL of a certain access request includes the proxy domain name, the browser will automatically generate an access request carrying the second cookie information for an intranet application.

In some embodiments, the proxy server may set a value of the name fields in the second cookie setting information as the same and identifiable. In this way, when the proxy server receives an access request from the browser, the proxy server may determine first whether the access request carries the second cookie information according to the value of the name fields in the cookie information carried in the access request. In response to the access request carrying the second cookie information, verification may be performed on the authorized content. In response to the access request not carrying the second cookie information, the access request may directly be identified as a unauthorized access, Then the proxy server may return the login page to the browser to notify the user to log in again.

With regard to the access request transmitted by the browser, because the first operation page fed back by the authentication server is generated based on the real domain name of the intranet application, domain names of all intranet applications contained in the first operation page are real domain names. In order to make the domain name carried in the URL in the intranet access request transmitted by the browser to be a proxy domain name, the proxy server needs to reconstruct the first operation page to obtain a new operation page (i.e., the second operation page). Herein, domain names of all intranet applications contained in the second operation page are proxy domain names.

The proxy server reconstructs the first operation page according to the local mapping table to generate the second operation page, and the reconstruction of the first operation page is implemented in the following manner: first, a real domain name of each intranet application contained in the first operation page is acquired; and then the virtual domain names corresponding to the real domain names are searched for according to the local mapping table, and the real domain names are modified into the virtual domain names.

In some embodiments, the proxy server parses the first operation page to acquire a real domain name of each intranet application contained in the first operation page. After acquiring each real domain name contained in the first operation page, the proxy server queries the local mapping table to obtain virtual domain names corresponding to the above real domain names. Then, the proxy server replaces the above real domain names with the virtual domain names to obtain a new URL and therefore a new operation page (i.e., the second operation page) containing a proxy domain name. On this basis, an access request generated by the browser based on the second operation page may be received by the proxy server.

A further description is made by referring to the above example. *A.baidu.com* corresponds to path1, *b.baidu.com* corresponds to path2, and *c.sina.com* corresponds to path3. The proxy domain name is *wsvpn.cn.* Therefore, the proxy server may replace *www.a.baidu.com* with *www.wsvpn.cn*/*path1,* replace *www.b.baidu.com* with *www.wsvpn.cn*/*path2*, and replace *www.c.sina.com* with *www.wsvpn.cn*/*path3.* Based on the new virtual domain names, the proxy server may reconstruct the first operation page to obtain the second operation page containing the proxy domain name.

In some embodiments, after the proxy server generates the second cookie setting information and the second operation page, the proxy server may transmit the second cookie setting information and the second operation page to the browser, so that the browser may generate the second cookie information based on the second cookie setting information, transmit an access request based on the second operation page, and carry the second cookie information in the transmitted access request.

It shall be particularly noted that the proxy server will not transmit the key information of the user to the browser but stores it in the local storage device. In this way, either at a browser side or during communication in an extranet, illegal interceptor cannot obtain the key information of the user, thereby it can be ensured that the key information of the user is prevented from being divulged.

It shall be particularly noted that the proxy server converges a real domain name of each intranet application under the proxy domain name. In this way, the browser only needs to manage an SSL credential of the proxy server, thereby overhead for managing the SSL credential by the browser can be significantly reduced.

In some embodiments, the proxy server may transmit the first cookie setting information to the browser. In this way, the browser may generate the first cookie information based on the above cookie setting information in local. As a result, when the browser transmits another access request to the authentication server, the first cookie information may be carried, so that the access request may be correctly processed by the authentication server. The another access request transmitted by the browser to the authentication server includes but is not limited to a request for refreshing a page.

S103: receiving a first access request generated by the browser based on the second operation page, querying, based on the target mapping relationship and according to the second cookie information carried in the first access request, the authorized content corresponding to the second cookie information, determining whether a target resource in a target intranet application directed to by the first access request exists in the authorized content, and accessing the target intranet application to request for the target resource in response to the target resource existing in the authorized content.

In some embodiments, after the browser receives the second cookie setting information and the second operation page, the browser parses the second operation page and then render it into a web page for the user to select a particular intranet application. And the browser locally generates and stores the second cookie information based on the second cookie setting information. When the user intends to access a certain intranet application (target intranet application) in the second operation page, the user may select a corresponding tag on the web page so that the browser may generate the corresponding access request (i.e., the first access request) based on the user's selection. The above first access request carries the second cookie information.

In response to receiving the first access request, the proxy server parses the first access request to obtain a target URL carried in the first access request and the second cookie information. After the parsing, the proxy server queries the target mapping relationship stored in the local storage device, and then finds out the authorized content corresponding to the second cookie information based on the second cookie information, thereby the proxy server can determine whether the target resource provided by the target intranet application directed to by the first access request exists in the above authorized content. In response to the above target resource existing in the above authorized content, the proxy server initiates an access request for the target resource, based on the above first access request, to a source station of the target intranet application directed to by the first access request. In response to the above target resource not existing in the above authorized content, and the proxy server returns a 403 status code to the browser to notify the user that he/she is not authorized to access a target service.

In some embodiments, in response to the proxy server not finding the authorized content corresponding to the second cookie information based on the second cookie information, the user's authentication information is determined to be invalid, and the proxy server returns the login page to the browser to notify the user to log in again.

In some embodiments, the operation of determining whether the target resource in the target intranet application directed to by the first access request exists in the authorized content may be implemented in the following manner: a real domain name corresponding to a virtual domain name carried in the first access request is searched for according to the local mapping table; and then whether the searched real domain name exists in the authorized content is determined.

In some embodiments, because the first access request is transmitted based on the second operation page, and the second operation page contains a combination of the proxy domain name and the path value (i.e., virtual domain name), the domain name in the target URL carried in the first access request is a virtual domain name. In practice, the proxy server may parse the target URL to obtain the virtual domain name carried in the target URL, and then search for the real domain name corresponding to the virtual domain name according to the local mapping table. After finding the real domain name, the proxy server may query the authorized content stored in the local storage device and corresponding to the second cookie information to determine whether the above-mentioned real domain name exists in the authorized content.

A further description is made referring to the above example. It is assumed that the target URL is *https:*//*www.wsvpn.cn*/*path1*/*info*/*9396*/*58chbdg3.htm*, the proxy server may, according to the local mapping table, find that *www.wsvpn.cn*/*path1* corresponds to www. *a.baidu.com.* Then the proxy server may query the authorized content corresponding to the second cookie information, compare *www.a.baidu.com* with a domain name information in the authorized content, and thereby determine whether *www.a.baidu.com* exists in the above authorized content. If yes, the user is authorized to access *https:llwww.wsvpn.cn*/*path1*/*info*/*9396*/*58chbdg3.*htm directly. If no, the user is not authorized to access the above target URL.

In some embodiments, the authorized content may include specific URLs. In this case, the operation of determining whether the target resource in the target intranet application directed to by the first access request exists in the authorized content may be implemented in the following manner: first, a real domain name corresponding to a virtual domain name carried in the first access request is searched for according to the local mapping table; an URL in the first access request is modified based on the searched real domain name, i.e., the virtual domain name carried in the first access request is replaced with the searched real domain name; and then whether the modified URL exists in the authorized content is determined.

Because the domain name carried in the target URL is a virtual domain name, the proxy server cannot directly access the target resource directed to by the first access request through the target URL.

In some embodiments, before accessing the target resource, the proxy server may modify the virtual domain name carried in the first access request to a corresponding real domain name to reconstruct the first access request. Specifically, the proxy server may find the real domain name corresponding to the virtual domain name carried in the target URL according to the local mapping table, and then replace the virtual domain name in the target URL with the above real domain name, thereby obtaining a new URL containing the above real domain name. Finally, the target URL carried in the first access request is modified to the above new URL to realize reconstruction of the first access request. After the reconstruction of the first access request, the proxy server may transmit the reconstructed first access request to the source station of the target intranet application to request for the target resource.

It shall be particularly noted that the authentication performed by the proxy server using the second cookie information may also be used to solve the problem that different users can use a same account and password to log in to an internal network at the same time.

In some embodiments, it is assumed that two different users (for ease of description, the users are called as user A and user B in the present disclosure) both obtain an account and a password for logging in the internal network. When user A first logs in the internal network, the authentication server feeds back first cookie setting information (denoted as Set-cookie 1) and authorized content to user A, and then the proxy server generates the second cookie setting information (denoted as Set-cookie2) based on Set-cookie 1. At the same time, the proxy server saves the mapping relationship between the second cookie information (denoted as cookie2, which is generated based on the Set-cookie2) and the authorized content. Subsequently, user B logs in the internal network using the same account and password, then the authentication server feeds back another piece of first cookie setting information (denoted as Set-cookie3) and authorized content to user A, and then the proxy server generates another piece of second cookie setting information (denoted as Set-cookie4) based on Set-cookie3, and at the same time, the proxy server saves a mapping relationship between the new second cookie information (denoted as cookie4, which is generated based on Set-cookie4) and the authorized content locally.

Since the character string value in Set-cookie 1 is not the same as that in Set-cookie3, Set-cookie2 and Set-cookie4 are not the same, correspondingly, cookie2 and cookie4 are not the same. However, key information of the user, such as a user ID, fed back by the authentication server is the same. Therefore, when the proxy server saves cookie information for a user, cookie4 will overwrite cookie2, that is, the proxy server always locally saves the mapping relationship between the latest second cookie information and the authorized content. When user A accesses the internal network for another time, the access request transmitted by user A will carry cookie2. Since the proxy server currently stores the mapping relationship between cookie4 and the authorized content in local, the proxy server cannot find the corresponding authorized content through cookie2, and the proxy server returns the login page to user A, that is, user A cannot access the internal network.

When user A uses the above account and password to log in the internal network again, based on the same principle, user B will not be able to access the internal network. In this way, the proxy server uses the second cookie information to perform authentication, so that different users cannot use a same account and password to access the internal network at the same time.

In some embodiments, after the proxy server accesses a first target page, the target source station may feed back user response information to the request sender (i.e., the proxy server). The above user response information may include third cookie setting information. In practice, information in a domain field in the above third cookie setting information is generally a generic domain name of a target application.

After the proxy server receives the user response information described above, the proxy server parses the third cookie setting information to obtain the information in the domain field in the third cookie setting information. The proxy server may generate a third cookie information according to content of the above third cookie setting information to establish a mapping relationship between the information in the domain field and the third cookie information. In this way, the proxy server may find corresponding third cookie information through the generic domain name.

In some embodiments, when the user selects other applications under a same generic domain name, the browser generates a corresponding access request (i.e., a second access request) based on the user's selection. The second access request carries the second cookie information. When the proxy server receives the above-mentioned second access request, the proxy server first verifies the second access request based on the second cookie information. In response to the verification being passed, the proxy server searches for, according to a real domain name corresponding to the virtual domain name contained in the second access request, a corresponding third cookie information from the mapping relationships between the information in the domain field and the third cookie information. After the proxy server finds the corresponding third cookie information, the proxy server may add the above third cookie information into the second access request. At the same time, the proxy server replaces the virtual domain name with the real domain name to reconstruct the second access request. Then, the reconstructed second access request is transmitted to the intranet application directed to by the second access request to request a corresponding resource.

After the target source station receives the reconstructed second access request, information in the third cookie information is parsed. Based on a result of the parsing, the target source station may determine whether the second access request is legal. If yes, the target source station sends a response resource to the proxy server. If no, the target source station sends a 403 status code to the proxy server.

For example, it is assumed that a real domain name for an intranet application 1 is *a.baidu.com,* a real domain name for an intranet application 2 is *b.baidu.com.* These two real domain names are both under a generic domain name of .*baidu.com.* After the user accesses an intranet service 1 through the proxy server, the proxy server will receive a third cookie setting information returned by the intranet application 1, and then the proxy server establishes a mapping relationship between *.baidu.com* and the third cookie information, thereby the proxy server may find the third cookie information through .*baidu.com.*

When the user intends to access an intranet service 2, because a domain field in the second cookie information is null and the path field is "/", an access request (i.e., the second access request) generated by the browser carries the second cookie information, and the proxy server may perform authorization verification on the second access request based on the second cookie information.

In this embodiment, the proxy server may query the local mapping table according to a virtual domain name (i.e., *wsvpn.cn*/*path2*) carried in the second access request to obtain a corresponding real domain name *b.baidu.com,* and thereby to obtain a corresponding generic domain name .*baidu.com.* Then, the corresponding third cookie information can be found according to the mapping relationship between the information in the domain field and the third cookie information. After that, the proxy server may add the above third cookie information into the second access request. Meanwhile, the proxy server may modify the virtual domain name in the second access request into a corresponding real domain name to implement reconstruction of the second access request. And the proxy server transmits the reconstructed second access request to a source station of the intranet service 2, so that the intranet service 2 may perform user behavior correlation based on the third cookie information.

In some embodiments, the proxy server may reconstruct the third cookie setting information according to the local mapping table. Specifically, the proxy server may search for, according to the real domain name in the domain field in the third cookie setting information, a virtual domain name corresponding to the real domain name, and then add the virtual domain name to a path field in the third cookie information. At the same time, the proxy server sets the domain field in the third cookie information to be null.

After the reconstruction of the third cookie setting information, the proxy server transmits the reconstructed third cookie setting information to the browser. Thus, when the user intends to re-access the intranet application, the browser may carry the third cookie information (generated based on the reconstructed third cookie setting information) in the access request transmitted this time to ensure normal operation of a cookie mechanism. In this way, an access failure resulted by no corresponding cookie information being carried when the browser transmits a request can be prevented.

Continuing with the above example, after the proxy server accesses the intranet service 1, the proxy server receives the third cookie setting information returned by the intranet application 1. Then the proxy server may reconstruct the third cookie setting information, set a domain field of the third cookie setting information to be null, add *wsvpn.cn*/*path1* to a path field of the third cookie setting information, and then transmit the reconstructed third cookie setting information to the browser. Thus, when the user intends to access a resource provided by the intranet application 1, for example, a page in response to the second access request, the access request transmitted by the browser will carry the third cookie information. In this way, normal operation of the cookie mechanism can be ensured, and the browser can access the intranet application 1 normally.

In some embodiments, user response information fed back by the target source station further includes a user response page, and domain names contained in the user response page are real domain names corresponding to each intranet application. However, the access request transmitted by the browser carries a virtual domain name, so it is necessary for the proxy server to reconstruct the above user response page. Specifically, the proxy server first acquires each real domain name contained in the user response page, and then searches for a virtual domain name corresponding to each real domain name according to the local mapping table, and then modifies the above real domain names to corresponding virtual domain names, thereby the reconstruction of the user response page is implemented. After the reconstruction of the user response page, the proxy server sends the reconstructed user response page to the browser, so that the browser can render the user response page.

In the present application, the second cookie information and the authorized content are bound to establish a unique mapping relationship between the key information of the user and the second cookie information. Then, the authentication on the user is managed based on the second cookie information, so that the authentication and application access are both performed at the proxy server side. In this way, the key information of the user is not saved at the browser side, thereby the key information of the user can be prevented from being divulged. Furthermore, by updating the second cookie information, different users cannot use a same account and password to access the internal network at the same time, thereby security of the system can be further improved.

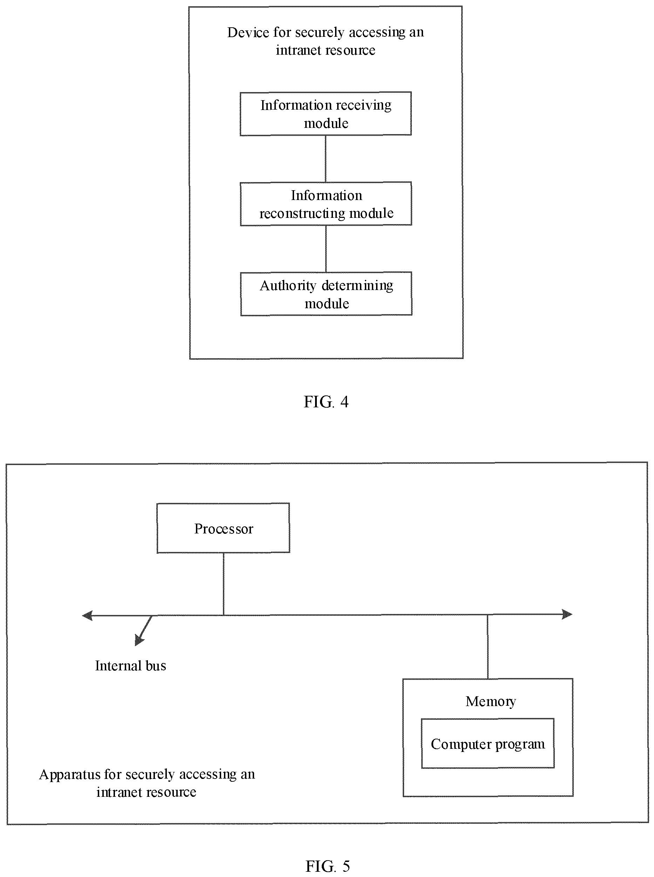

With reference to FIG. 4, the present disclosure further provides a device for securely accessing an intranet application. The device is applied to a proxy server and stores a local mapping table, where the local mapping table is used for recording a mapping relationship between a real domain name and a virtual domain name of the intranet application, the device includes:
an information receiving module, configured to receive authentication information fed back by an authentication server, where the authentication information at least includes first cookie setting information, authorized content and a first operation page;
an information reconstructing module, configured to generate second cookie setting information based on the first cookie setting information and generate second cookie information according to the second cookie setting information to establish a target mapping relationship between the second cookie information and the authorized content, the information reconstructing module is further configured to reconstruct the first operation page according to the local mapping table to generate a second operation page, and transmit the second cookie setting information and the second operation page to a browser; and
an authority determining module, configured to receive a first access request generated by the browser based on the second operation page, query, based on the target mapping relationship and according to the second cookie information carried in the first access request, the authorized content corresponding to the second cookie information, and determine whether a target resource in a target intranet application directed to by the first access request exists in the authorized content, the authority determining module is further configured to access the target intranet application to request for the target resource in response to the target resource existing in the authorized content.

In some embodiments, the operation of generating the second cookie setting information based on the first cookie setting information includes:
generating a target character string value based on a character string value in the first cookie setting information; and
taking the target character string value as a character string value of the second cookie setting information.

In some embodiments, the device further includes:
a domain name processing module, configured to acquire a real domain name of each intranet application, set a corresponding virtual domain name for each real domain name, and establish a mapping relationship between the each real domain name and the corresponding virtual domain name and store the mapping relationship in the local mapping table, the virtual domain name includes a proxy domain name and a path value, and different real domain names corresponding to different path values.

In some embodiments, the operation of reconstructing the first operation page according to the local mapping table to generate the second operation page includes:
acquiring a real domain name of each intranet application in the first operation page; and
searching for virtual domain names corresponding to acquired real domain names according to the local mapping table, and modifying the acquired real domain names into corresponding virtual domain names.

In some embodiments, the operation of determining whether the target resource in the target intranet application directed to by the first access request exists in the authorized content includes:
searching for a real domain name corresponding to a virtual domain name carried in the first access request according to the local mapping table;
determining whether searched real domain name exists in the authorized content; or
searching for the real domain name corresponding to the virtual domain name carried in the first access request according to the local mapping table, and modifying an URL in the first access request based on the searched real domain name, where the operation of modifying the URL in the first access request based on the searched real domain name includes replacing the virtual domain name carried in the first access request with the searched real domain name; and
determining whether modified URL exists in the authorized content.

In some embodiments, the information reconstructing module is further configured to modify the virtual domain name carried in the first access request into corresponding real domain name to reconstruct the first access request; and
the authority determining module is further configured to transmit a request for the target resource to the target intranet application based on reconstructed first access request.

In some embodiments, the information receiving module is further configured to receive user response information fed back by the target intranet application, the user response information at least includes a third cookie setting information; and
the information reconstructing module is further configured to reconstruct the third cookie setting information and acquire information in a domain field in the third cookie setting information, and generate a third cookie information according to the third cookie setting information to establish a mapping relationship between the information in the domain field and the third cookie information.

In some embodiments, the authority determining module is further configured to receive a second access request transmitted by the browser, search for the third cookie information based on the local mapping table and the mapping relationship between the information in the domain field and the third cookie information in response to the second access request not carrying the third cookie information, add the third cookie information to the second access request to reconstruct the second access request, and transmit reconstructed second access request to an intranet application directed to by the second access request.

In some embodiments, the information reconstructing module is further configured to acquire each real domain name included in the user response page, search for a virtual domain name corresponding to the each real domain name according to the local mapping table, and reconstruct the user response page based on the virtual domain name and transmit reconstructed user response page to the browser.

With reference to FIG. 5, the present disclosure further provides an apparatus for securely accessing an intranet application. The apparatus includes a memory and a processor. The memory is configured to store a computer program, which, when executed by the processor, causes the processor to implement operations of the method for securely accessing an intranet application as described above. Particularly, in terms of hardware, the apparatus may include a processor, an internal bus and a memory. The memory may include an internal memory and a non-transitory memory. The processor reads a corresponding computer program from the non-transitory memory and runs the computer program in the internal memory. Those skilled in the art may understand that the structure shown in FIG. 5 is only an example rather than a limitation to the structure of the above apparatus. For example, the apparatus may include more or less components than those shown in FIG. 5. For example, the apparatus may further include other processing hardware, such as a graphics processing unit (GPU) or an external communication port. Apart from a hardware implementing manner, the present disclosure does not exclude other implementing manner, for example, through a logic device or a combination of software and hardware.

In this embodiment, the processor may include a central processing unit (CPU) or a GPU, and may include other components such as a single-chip microcomputer capable of logical processing, a logic gate circuit and an integrated circuit and the like or a combination thereof. The memory disclosed in this embodiment may be a memory device for storing information. In a digital system, a device capable of storing binary data may be a memory. In an integrated circuit, a circuit with a storing function but without a physical form may also be a memory, for example, a random access memory (RAM), a first input first output (FIFO) memory and the like. In a system, a memory device with an entity form may also be called a memory. In implementation, the memory may be implemented as a cloud memory, to which this description does not put a limitation.

It shall be noted that for a particular implementing manner for the device for securely accessing an intranet application, the method embodiments may be referred to and will not be repeated here.

In the technical solutions provided in the present disclosure, a unique mapping relationship between the key information of the user and the second cookie information is established by binding the second cookie information with the authorized content. Then, the authentication on the user is managed based on the second cookie information, so that the authentication and application access are both performed at the proxy server side. In this way, the key information of the user is not stored at the browser side, thereby the key information of the user can be prevented from being divulged. Meanwhile, by updating the second cookie information, different users cannot use a same account and password to access the internal network at the same time, thereby security of the system can be further improved. With regard to a case in which some websites perform internal authority management using the cookie mechanism, in the present disclosure, the mapping relationship between the third cookie information and the generic domain name is established based on the third cookie information fed back by the websites, thereby access by the user can be simplified. Moreover, the third cookie information is reconstructed to ensure normal operation of the cookie mechanism, thereby error can be avoided when the browser renders a web page.

Through description in the above embodiment, those skilled in the art may clearly know that the embodiments may be implemented through software plus a necessary general hardware platform, or through hardware. Based on this, contents that substantively makes contribution to the existing technology may be embodied through software products. The computer software product may be stored in a storage medium such as an ROM/RAM, magnetic disc, optical disc and so on. The storage medium includes some instructions to enable a computer device (which may be a personal computer, a server or a network device and the like) to execute the methods of the embodiments or some parts of the embodiments.

The above-described are only some embodiments of the present disclosure, but are not used to impose a limitation to the present disclosure. Any amendment, equivalent substitution and improvement made within the spirit and principle of the present disclosure shall be included in the protection scope of the present disclosure.

## Claims

1. A method for securely accessing an intranet application, applied to a proxy server storing a local mapping table, wherein the local mapping table is used for recording a mapping relationship between a real domain name and a virtual domain name of the intranet application, the method comprises:
receiving authentication information fed back by an authentication server, wherein the authentication information at least comprises first cookie setting information, authorized content and a first operation page;
generating second cookie setting information based on the first cookie setting information and generating second cookie information according to the second cookie setting information to establish a target mapping relationship between the second cookie information and the authorized content, reconstructing the first operation page according to the local mapping table to generate a second operation page, and transmitting the second cookie setting information and the second operation page to a browser; and
receiving a first access request generated by the browser based on the second operation page, querying, based on the target mapping relationship and according to the second cookie information carried in the first access request, the authorized content corresponding to the second cookie information, determining whether a target resource in a target intranet application directed to by the first access request exists in the authorized content, and accessing the target intranet application to request for the target resource in response to the target resource existing in the authorized content.

2. The method according to claim 1, wherein generating the second cookie setting information based on the first cookie setting information comprises:
generating a target character string value based on a character string value in the first cookie setting information; and
taking the target character string value as a character string value of the second cookie setting information.

3. The method according to claim 1, wherein before receiving the authentication information fed back by the authentication server, the method further comprises:
acquiring a real domain name of each intranet application, and setting a corresponding virtual domain name for each real domain name, wherein the virtual domain name comprises a proxy domain name and a path value, and different real domain names correspond to different path values; and
establishing a mapping relationship between the each real domain name and the corresponding virtual domain name, and storing the mapping relationship in the local mapping table.

4. The method according to claim 1, wherein reconstructing the first operation page according to the local mapping table to generate the second operation page comprises:
acquiring a real domain name of each intranet application in the first operation page; and
searching for virtual domain names corresponding to acquired real domain names according to the local mapping table, and modifying the acquired real domain names into corresponding virtual domain names.

5. The method according to claim 1, wherein determining whether the target resource in the target intranet application directed to by the first access request exists in the authorized content comprises:
searching for a real domain name corresponding to a virtual domain name carried in the first access request according to the local mapping table;
determining whether searched real domain name exists in the authorized content; or
searching for the real domain name corresponding to the virtual domain name carried in the first access request according to the local mapping table, and modifying an URL in the first access request based on the searched real domain name, wherein the modifying the URL in the first access request based on the searched real domain name comprises replacing the virtual domain name carried in the first access request with the searched real domain name; and
determining whether modified URL exists in the authorized content.

6. The method according to claim 5, wherein before accessing the target intranet application, the method further comprises:
modifying the virtual domain name carried in the first access request into corresponding real domain name to reconstruct the first access request; and
transmitting a request for the target resource to the target intranet application based on reconstructed first access request.

7. The method according to claim 6, wherein after accessing the target intranet application, the method further comprises:
receiving user response information fed back by the target intranet application, wherein the user response information at least comprises a third cookie setting information;
reconstructing the third cookie setting information and acquiring information in a domain field in the third cookie setting information, and generating a third cookie information according to the third cookie setting information to establish a mapping relationship between the information in the domain field and the third cookie information.

8. The method according to claim 7, wherein after transmitting the reconstructed third cookie setting information to the browser, the method further comprises:
receiving a second access request transmitted by the browser, and searching for the third cookie information based on the local mapping table and the mapping relationship between the information in the domain field and the third cookie information in response to the second access request not carrying the third cookie information; and
adding the third cookie information to the second access request to reconstruct the second access request, and transmitting reconstructed second access request to an intranet application directed to by the second access request.

9. The method according to claim 6, wherein after accessing the target intranet application, the method further comprises:
receiving user response information fed back by the target intranet application, wherein the user response information comprises a user response page;
acquiring each real domain name in the user response page, and searching for a virtual domain name corresponding to the each real domain name according to the local mapping table; and
reconstructing the user response page based on searched virtual domain names and transmitting reconstructed user response page to the browser.

10. The method according to claim 1, wherein before querying the authorized content according to the second cookie information carried in the first access request, the method further comprises:
determining whether the first access request carries the second cookie information, and querying the authorized content in response to the first access request carrying the second cookie information.

11. A device for securely accessing an intranet application, applied to a proxy server and storing a local mapping table, wherein the local mapping table is used for recording a mapping relationship between a real domain name and a virtual domain name of the intranet application, the device comprises:
an information receiving module, configured to receive authentication information fed back by an authentication server, wherein the authentication information at least comprises first cookie setting information, authorized content and a first operation page;
an information reconstructing module, configured to generate second cookie setting information based on the first cookie setting information and generate second cookie information according to the second cookie setting information to establish a target mapping relationship between the second cookie information and the authorized content, the information reconstructing module is further configured to reconstruct the first operation page according to the local mapping table to generate a second operation page, and transmit the second cookie setting information and the second operation page to a browser; and
an authority determining module, configured to receive a first access request generated by the browser based on the second operation page, query, based on the target mapping relationship and according to the second cookie information carried in the first access request, the authorized content corresponding to the second cookie information, and determine whether a target resource in a target intranet application directed to by the first access request exists in the authorized content, the authority determining module is further configured to access the target intranet application to request for the target resource in response to the target resource existing in the authorized content.

12. The device according to claim 11, wherein the operation of generating the second cookie setting information based on the first cookie setting information comprises:
generating a target character string value based on a character string value in the first cookie setting information; and
taking the target character string value as a character string value of the second cookie setting information.

13. The device according to claim 11, further comprising:
a domain name processing module, configured to acquire a real domain name of each intranet application, set a corresponding virtual domain name for each real domain name, and establish a mapping relationship between the each real domain name and the corresponding virtual domain name and store established mapping relationship in the local mapping table, wherein the virtual domain name comprises a proxy domain name and a path value, and different real domain names correspond to different path values.

14. The device according to claim 11, wherein the operation of reconstructing the first operation page according to the local mapping table to generate the second operation page comprises:
acquiring a real domain name of each intranet application in the first operation page; and
searching for virtual domain names corresponding to acquired real domain names according to the local mapping table, and modifying the acquired real domain names into corresponding virtual domain names.

15. The device according to claim 11, wherein the operation of determining whether the target resource in the target intranet application directed to by the first access request exists in the authorized content comprises:
searching for a real domain name corresponding to a virtual domain name carried in the first access request according to the local mapping table;
determining whether searched real domain name exists in the authorized content; or
searching for the real domain name corresponding to the virtual domain name carried in the first access request according to the local mapping table, and modifying an URL in the first access request based on the searched real domain name, wherein the modifying the URL in the first access request based on the searched real domain name comprises replacing the virtual domain name carried in the first access request with the searched real domain name; and
determining whether modified URL exists in the authorized content.

16. The device according to claim 15, wherein:
the information reconstructing module is further configured to modify the virtual domain name carried in the first access request into corresponding real domain name to reconstruct the first access request; and
the authority determining module is further configured to transmit a request for the target resource to the target intranet application based on reconstructed first access request.

17. The device according to claim 16, wherein:
the information receiving module is further configured to receive user response information fed back by the target intranet application, wherein the user response information at least comprises a third cookie setting information; and
the information reconstructing module is further configured to reconstruct the third cookie setting information and acquire information in a domain field in the third cookie setting information, and generate a third cookie information according to the third cookie setting information to establish a mapping relationship between the information in the domain field and the third cookie information.

18. The device according to claim 17, wherein:
the authority determining module is further configured to receive a second access request transmitted by the browser, search for the third cookie information based on the local mapping table and the mapping relationship between the information in the domain field and the third cookie information in response to the second access request not carrying the third cookie information, add the third cookie information to the second access request to reconstruct the second access request, and transmit reconstructed second access request to an intranet application directed to by the second access request.

19. An apparatus for securely accessing an intranet application, comprising a memory and a processor, wherein the memory is configured to store a computer program, which, when executed by the processor, causes the processor to implement operations of the method according to any one of claims 1 to 9.
